# EUROPEAN PATENT APPLICATION

(11) **EP 1 213 690 A2**
(43) Date of publication of application: **12.06.2002**
(21) Application number: 01310075.5
(22) Date of filing: 30.11.2001
(51) Int. Cl.: G07F 19/00

(54) **Efficient and secure bill payment method and system via mobile IP terminals**

(30) Priority: 06.12.2000 US 731344
(71) Applicant: AT&T Corp., New York, NY 10013-2412 (US)
(72) Inventor: O'Neil, Joseph, New York, NY 10312 (US)
(74) Representative: Suckling, Andrew Michael

(57) **Abstract**

An efficient and secure system and method for customers with mobile terminals to pay bills for services rendered at a merchant's establishment. In an exemplary embodiment, the merchant's establishment is a restaurant. The restaurant has a server which uses short-range wireless technology to answer inquiries from customers. The server also stores charges for each table, which are transmitted to and displayed on a customer's mobile terminal when the customer requests a bill. A network-based server receives approval from the mobile terminal to charge the user's credit card number for services rendered by the merchant. The charges are then forwarded to, and validated by, an appropriate credit card agency server. The network-based server provides both the merchant and the user with payment confirmations. Payment information, however, such as a credit card number, is not revealed to the merchant, thereby eliminating the possibility of unauthorized use by an unscrupulous merchant or agent thereof.

## Description

### FIELD OF THE INVENTION

This invention relates generally to wireless data communications systems, and more particularly, to an efficient and secure method for consumers with mobile IP terminals to pay bills at merchant locations.

### BACKGROUND OF THE INVENTION

Currently, a merchant provides a customer with a service, such as a meal, and then presents the customer with a bill. Quite understandably, the customer must pay the bill before leaving the merchant's premises. However, this often involves considerable delays. First, there are often delays associated with getting the merchant's attention to obtain the bill. Second, there are also frequently delays associated with the merchant's processing of payment whether by cash or credit card. In addition, when payment is by credit card, unscrupulous merchants or agents thereof, can readily steal the customer's credit card information and use it for unauthorized purposes.

### SUMMARY OF THE INVENTION

The above-identified problems are solved and a technical advance is achieved in the art by providing a system and method directed to an efficient and secure method for using a mobile wireless terminal to pay for charges associated with services rendered by a merchant. An exemplary method includes: receiving a service; requesting charges associated with the service; receiving and displaying the charges; and transmitting, using the mobile wireless terminal, payment information.

An efficient and secure system and method to permit a merchant to receive payment for charges associated with services provided to a user of a mobile wireless terminal are also disclosed. An exemplary method includes receiving a request for charges from the user; providing charges for display to the user; and receiving confirmation of payment, wherein the merchant does not receive payment information of the user.

In addition, an efficient and secure system and method to permit a user of a mobile wireless terminal to pay for charges associated with services rendered by a merchant are disclosed. An exemplary method includes: receiving an approval of the charges from the user, the approval including payment information; and providing confirmation of payment, wherein the payment information is not disclosed to the merchant.

Other and further aspects of the present invention will become apparent during the course of the following description and by reference to the attached drawings.

### BRIEF DESCRIPTION OF THE DRAWINGS

FIG. 1 is a block diagram illustrating one embodiment of the present invention.
FIG. 2 is a block diagram illustrating an exemplary message flow between mobile IP terminal, merchant server, bill payment server and credit card agency server in accordance with one embodiment of the present invention.
FIG. 3 is a block diagram illustrating exemplary user interfaces for a mobile IP terminal.
FIG. 4 is a block diagram illustrating an exemplary message flow between mobile IP terminal, merchant server, bill payment server and credit card agency server in accordance with an alternate embodiment of the present invention.

### DETAILED DESCRIPTION

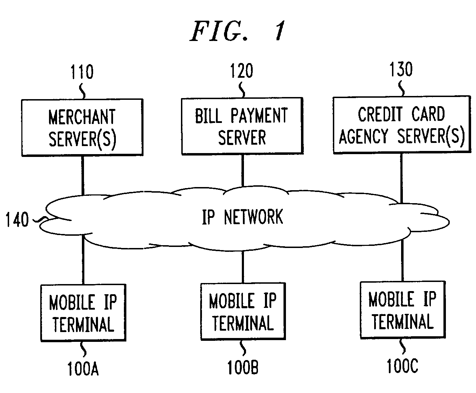

The present invention is directed to an efficient and secure system and method for users of mobile terminals to pay bills for services received at merchant locations, such as restaurants. Referring now to the drawings, FIG. 1 is a block diagram of an illustrative embodiment of the present invention. As depicted therein, a plurality of mobile Internet protocol ("IP") terminals 100, a plurality of merchant servers 110, a bill payment server 120 and a plurality of credit card agency servers 130 are coupled to a data network. In one advantageous embodiment, the data network is an IP network 140, such as the Internet. Mobile IP terminals 100 may be coupled to IP network 140 via a wireless switching network, the public switched telephone network (PSTN) and a data network access service, such as an Internet Service Provider (ISP). The merchant servers 110, bill payment server 120 and credit card agency servers 130 may be coupled to IP network 140 via the PSTN and an ISP.

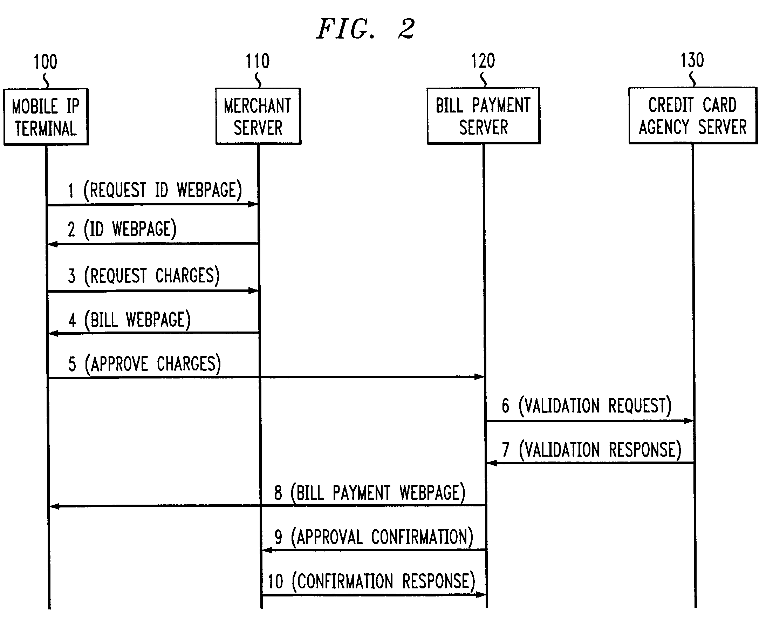

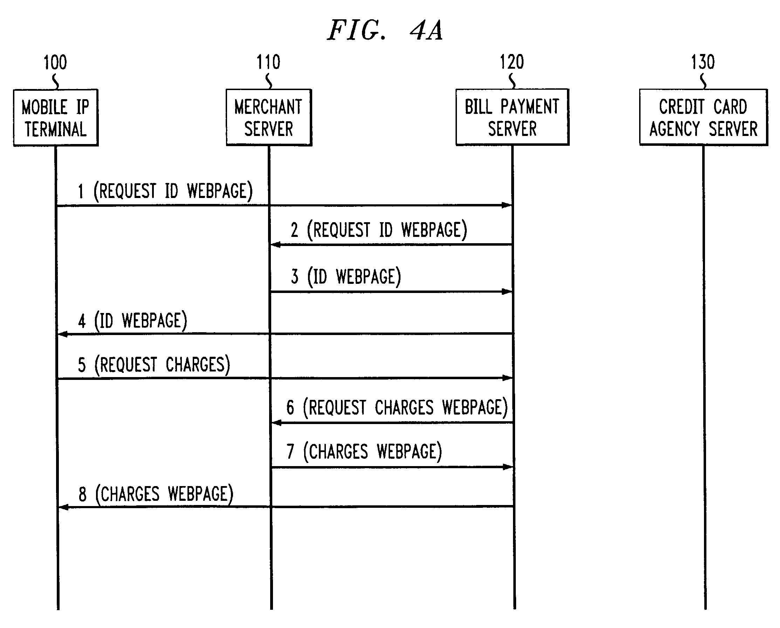

A mobile IP terminal 100, as shown in FIG. 1, is a portable communications device such as a cellular telephone, Palm™ hand-held device, laptop computer or the like with a portable data network access capability. Terminal 100 includes a screen for displaying information downloaded from the data network. The screen is also used for displaying a merchant icon, which, in one embodiment, is selected by the user of mobile IP terminal 100 to initiate the enhanced and secure bill payment method of the present invention. Preferably, mobile IP terminal 100 is equipped with short range wireless technology, such as "Bluetooth ™", for communicating directly with a similarly equipped merchant server 110, as will be discussed in detail hereinafter in connection with FIG. 2. In embodiments where a short range wireless connection between mobile IP terminal 100 and merchant server 110 is not available, mobile IP terminal 100 also includes a GPS capability, which it uses to provide bill payment server 120 with its current location. Bill payment server 120 then uses this information to identify the merchant at whose establishment the user is currently located and, in particular, to identify the IP address of the merchant's server. Server 120 uses the IP address to relay user requests received via IP network 140 to merchant server 110, as will be discussed in detail hereinafter in connection with FIG. 4A.

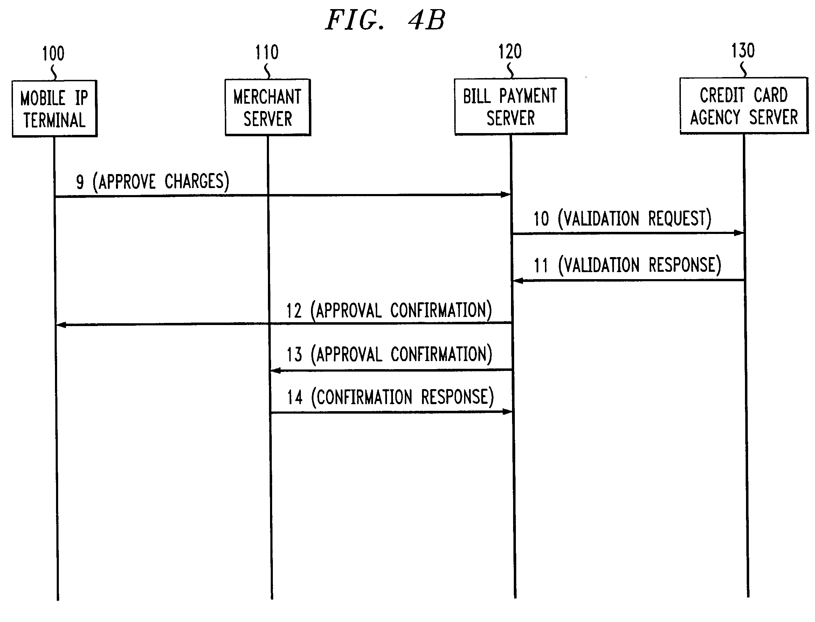

Merchant servers 110 are located at merchant locations. A merchant server 110 includes a CPU together with associated memory for performing a variety of processes. In one embodiment, these processes include providing a series of hypertext transfer protocol ("http") web pages to customers with mobile IP terminals, such as a web page for allowing users to request a bill from the merchant and a web page for permitting the merchant to display the bill to the user. The CPU of server 110 is coupled to IP network 140 via a communications port, which it uses to communicate with bill payment server 120. Preferably, merchant servers 110 are equipped with a short range wireless technology, such as the above-mentioned Bluetooth™, for communicating directly with similarly equipped mobile IP terminals 100. Direct communication with mobile IP terminals 100 can alternatively be accomplished over data network 140. The various methods of communication between merchant server 110, mobile IP terminals 100 and bill payment server 120 will become apparent hereinafter in connection with the discussion of FIGS. 2, 4A and 4B. The CPU is also coupled to a data storage device. The data storage device includes a variety of databases including a user database for storing information concerning transactions between the merchant and mobile IP terminal users, and a billing database for keeping track of services provided to the users and the charges associated with those services.

Bill payment server 120 is a network-based server. It includes a CPU together with associated memory for performing a variety of processes. Such processes include receiving merchant charges which have been approved by a user, submitting a credit card validation request to, and receiving a validation response from, credit card agency server 130, and transmitting approval confirmations to mobile IP terminal 100 and merchant server 110. The CPU is coupled to IP network 140 via a communications port, which, in one embodiment, is used to communicate with mobile IP terminals 100, merchant servers 110 and credit card agency servers 130. The CPU is also coupled to a data storage device, which includes a user database for storing information concerning transactions between merchants and mobile IP terminal users. In one embodiment, bill payment server 120 also includes a merchant database for use in correlating geographic location information received from mobile IP terminal 100 with geographic location information of merchants to determine the identity of the merchant at whose establishment the user is currently located, and, more particularly, to determine the IP address of the merchant server.

Credit card agency server 130 also includes a CPU together with associated memory. It is a typical server used in validating credit card transactions in a manner well-known in the art, and thus, will be described in detail hereinafter only to the extent that it may be modified to differ from a typical credit card validation server.

FIG. 2 is a block diagram illustrating an exemplary message flow between mobile IP terminal 100, merchant server 110, bill payment server 120 and credit card agency server 130 in accordance with one embodiment of the present invention.

A user of mobile IP terminal 100 enters a merchant's premises, thereby bringing mobile IP terminal 100 in proximity to merchant server 110. In the embodiment of FIG. 2, mobile IP terminal 100 and merchant server 110 are both equipped with a short-range wireless technology, such as Bluetooth™, for communicating with one another. The Bluetooth™ protocol architecture is described in Mettala R., "Bluetooth Protocol Architecture", Ver. 1.0, Bluetooth White Paper, August 25, 1999, a copy of which is incorporated herein by reference. Bringing mobile IP terminal 100 and merchant server 110 within proximity of one another automatically causes a handshake to occur over the short-range wireless connection in a manner well-known in the art. The Bluetooth™ Salutation Architecture, which provides a standard method for devices to describe and advertise their capabilities to other devices, and, in turn, to determine the capabilities of other devices, is described in Miller B., "Mapping Salutation Architecture APIs to Bluetooth Service Discovery Layer", Ver. 1.0, Bluetooth White Paper, August 25, 1999, a copy of which is also incorporated herein by reference. In accordance with one feature of the present invention, the information received by mobile IP terminal 100 during the handshake process includes the merchant server's IP address.

At any time after the handshake between mobile IP terminal 100 and merchant server 110 has occurred, the user may select a merchant icon from the terminal's display to initiate the secure and efficient bill payment method of the present invention. The icon is preferably, although not limited to, a "generic" merchant icon, or, in other words, one which is not associated specifically with the merchant whose premises the user has entered. Thus, it may simply be an icon generally representative of the secure and efficient bill payment method of the present invention. Alternatively, a pull-down menu with the merchant option could be used to initiate the secure and efficient bill payment method of the present invention.

Selection of the icon causes an http "Request ID Webpage" message to be transmitted to merchant server 110 over the short-range wireless connection using the TCP/IP protocol. The Request ID Webpage message contains source and destination IP addresses as required by the TCP/IP protocol, and thus, contains the IP addresses of both mobile IP terminal 100 and merchant server 110. It should be understood that upon receiving the IP address of merchant server 110 during the handshaking process, mobile IP terminal 100 could have transmitted the Request ID Webpage message, and any subsequent messages, over a public switched wireless network and IP network 140, rather than over the short range wireless connection. However, this alternative is less favorable for obvious reasons.

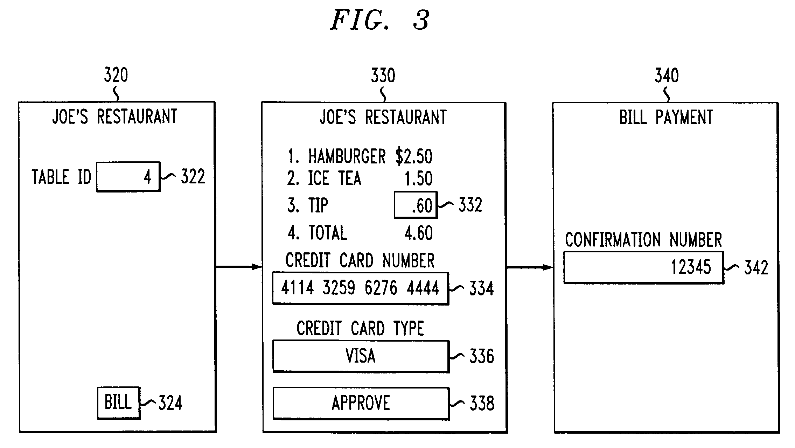

Upon receipt of the Request ID Webpage message, merchant server 110 generates a transaction identifier, creates a user record for the transaction in its user database, and stores the transaction identifier together with the IP address of the mobile IP terminal 100 in the user record. In step 2, merchant server 110 transmits an http "ID Web Page" to mobile IP terminal 100 using the short range wireless connection. The ID Web Page will permit the user to identify himself to merchant server 110, and thus, permits merchant server 110 to associate the user with the charges incurred for the services rendered. FIG. 3 illustrates various graphical user interfaces (GUIs) that are presented to a user of a mobile IP terminal 100 at various points throughout the secure and efficient bill payment method of the present invention. Although the GUI's of FIG. 3 are specific to the scenario where the merchant is a restaurant, similar GUIs can be used by other types of merchants. An exemplary ID Web Page is shown in FIG. 3. As shown therein, ID web page 320, in accordance with an advantageous embodiment of the present invention, includes the name of the restaurant, a field 322 for entry of a table number, and a button 324 for requesting a bill.

As requested services are being provided to the user, the merchant, or an agent thereof, such as a waiter, will record the services together with the associated charges and the table number in the "billing" database of merchant server 110. Entry of this information into the database may be via a keyboard coupled to server 110, or, alternatively, via a mobile IP terminal used by the merchant. If entered via a mobile IP terminal, communication with merchant server 110 is preferably accomplished using short range wireless technology and the IP address of the merchant server 110.

Returning to FIG. 2, in step 3, a user of the mobile IP terminal 100 initiates transmission of an http "Request Charges" message to merchant server 110 by entering the table number at which he is seated into the "Table ID" field 322 of ID Web Page 320 and depressing the "Bill" button 324. (See FIG. 3) The merchant preferably provides the table number to the user at the time of seating. The merchant may provide the table number verbally, for manual entry into Table ID field 322 and subsequent transmission, in step 3, to merchant server 110. Alternatively, the merchant may use a mobile IP terminal to transmit the table number directly to the customer's mobile IP terminal 100 using short range wireless technology, once again, for subsequent transmission, in step 3, to merchant server 110. The alternative method is more secure in that it prevents a user from modifying the table number presented to server 110. In any event, upon receipt, merchant server 110 uses the table number to retrieve the charges for the table at which the user is seated from its billing database.

In step 4, merchant server 110 transmits an http "Bill Web Page" to mobile IP terminal 100. This web page includes the bill or "check" for the services that the merchant provided to the user of mobile IP terminal 100. An exemplary Bill Web Page 330 is shown in FIG. 3. As illustrated therein, Bill Web Page 330 includes the name of the restaurant, a list of services rendered and the associated charges. Web page 330 also includes fields for the user of mobile IP terminal 100 to enter a tip 332, credit card number 334 and credit card type 336.

In step 5, after entering the tip, credit card number and credit card type, the user of mobile IP terminal 100 selects the "Approve Charges" button 338 of Bill Web Page 330, thereby causing an "approve charges" message to be transmitted to bill payment server 120. The "approve charges" message includes the credit card number, credit card type, description of the charges and the amount of the charges. The message also includes information associated with the "Approve" button 338, and, more particularly, with the act of selecting the approve button, such as the IP address of bill payment server 120, the transaction identifier, a merchant identifier and the merchant IP address. Lastly, the message includes the IP address of mobile IP terminal 100 (i.e., the source address) pursuant to the TCP/IP protocol. Upon receipt of the "Approve Charges" message, bill payment server 120 temporarily stores the information contained in the message in its user database.

In step 6, bill payment server 120 transmits a validation request for this transaction to a credit card agency server 130 associated with the card type stored in the user's record of user database. The validation request may be transmitted to credit card agency server 130 via an IP connection (in which case, bill payment server 120 maintains a look-up table of IP addresses for each credit card type, and thus, for each credit card agency server 130), although it will be readily appreciated that any type of data connection well-known in the art may be used for credit card validation. The validation request includes the transaction identifier, the user's credit card number, the description of the charges and the amount of the charges.

In step 7, credit card agency server 130 transmits a validation response to bill payment server 120. The validation response includes the transaction identifier, an approval flag (which equals true or false, corresponding to approve or deny, respectively) and a unique confirmation number (if the approval flag is true). Bill payment server 120 then stores the approval flag and confirmation number in the user record for this transaction.

In step 8, bill payment server 120 transmits an http "Bill Payment Web Page" containing the approval flag and confirmation number to mobile IP terminal 100 using the IP address of the mobile IP terminal stored in the user database. Referring to FIG. 3, the Bill Payment Web Page 340 presented to the user includes a field 342 for displaying the confirmation number. In step 9, bill payment server 120 transmits an approval confirmation message including the transaction identifier, approval flag and confirmation number to merchant server 110. The user's credit card information, however, is not disclosed to the merchant, and thus, the potential for fraud is eliminated. In step 10, merchant server transmits a confirmation acknowledgment message including the transaction identifier to bill payment server 120. Upon receipt of the confirmation acknowledgment message, bill payment server 120 preferably deletes the user record from user database to minimize the capacity requirements associated with storing data for large numbers of transactions.

FIGS. 4A and 4B are block diagrams illustrating an exemplary message flow between mobile IP terminal 100, merchant server 110, bill payment server 120 and credit card agency server 130 in accordance with an alternate embodiment of the present invention. In this embodiment, short-range wireless technology between mobile IP terminal 100 and merchant server 110 is not employed. Instead, all communications between mobile IP terminal 100 and merchant server 110 occur over the long range wireless network and IP network 140 with bill payment server 120 acting as an intermediary.

In step 1, a user of mobile IP terminal 100 enters a merchant's premises and initiates the secure and efficient bill payment method of the present invention by selecting the merchant icon from the terminal's display. Selection of the icon causes an http "Request ID Webpage" message to be sent to bill payment server 120 over a long range wireless connection (e.g., a public switched wireless network) and IP network 140. The Request ID Webpage message includes the IP address of mobile IP terminal 100 and bill payment server 120 in accordance with TCP/IP. In this embodiment, the IP address of bill payment server 120 is pre-programmed in mobile IP terminal 100 and is associated with selection of the merchant icon. The Request ID Webpage message also includes geographic information concerning the mobile IP terminal's current location. Mobile IP terminal 100 determines its current location either periodically (e.g., every 5 seconds) or at the time of selection of the merchant icon by the user.

Upon receipt of the "Request ID Webpage" message, bill payment server 120 generates a transaction identifier, creates a user record for the transaction in its user database and stores in the user record the transaction identifier together with the IP address and current geographic location of mobile IP terminal 100. Bill payment server 120 then accesses its merchant database and compares the geographic information received from mobile IP terminal 100 with the geographic information of merchants stored in the database to determine the identity of the merchant where the user is located, and, in particular, to identify the IP address of the merchant's server 110.

Once the IP address of the merchant has been identified, the bill payment server 120 transmits an http "Request ID Web Page" message to merchant server 110 via IP network 140 using the IP address of server 110. The Request ID Web Page message includes the transaction identifier and the IP address of bill payment server 120. Merchant server 110 then stores the transaction identifier and IP address of bill payment server 120 in its user database. In step 3, merchant server 110 transmits an http "ID Web Page" to bill payment server 120 via IP network 140 using the IP address of bill payment server 120. As in the previous embodiment, the ID web page permits the user to identify himself to merchant server 110, and thus, permits merchant server 110 to associate the user with the charges accrued for the services rendered by the merchant. As discussed above in connection with the embodiment of FIG. 2, an exemplary ID Web Page 320 for requesting billing information is illustrated in FIG. 3. In the embodiment of FIG. 4A, however, button 324 on ID Web Page 320 is associated with the IP address of bill payment server 120, rather than the IP address of merchant server 110, since communication between mobile IP terminal 100 and merchant server 110 over the data network 140 is via bill payment server 120. In step 4, bill payment server 120 transmits the ID Web Page to mobile IP terminal 100.

In step 5, when the user is ready to leave the merchant's establishment, he selects button 324 of the ID web page to request a bill for services rendered. This causes an http "Request Charges" message to be transmitted from mobile IP terminal 100 to bill payment server 120 via a long range wireless connection and IP network 140. The message includes the IP address of mobile IP terminal 100 and the number of the table at which the user is seated. Bill payment server 120 then uses the received IP address to access the appropriate record of user database and store the table number therein.

In step 6, bill payment server 120 transmits a "Request Charges Webpage" message to merchant server 110. The message includes the table number received from mobile IP terminal 100 and the transaction identifier retrieved from its user database using the table number. As in the embodiment of FIG. 2, the merchant would have been entering the charges for services rendered into the billing database of merchant server 110 as the services were being provided to the user.

In step 7, merchant server 110 uses the transaction identifier and/or table number to retrieve the charges, and transmits the bill in the form of an http "Charges Web Page" to bill payment server 120. Transmission is via IP network 140 using the bill payment server's IP address. As in the previous embodiment, the Charges Web Page permits the user to approve the charges for the services received from the merchant. An exemplary Charges Web Page 330 is illustrated in FIG. 3. In the embodiment of FIG. 4A, the approve button 338 of the Charge Web Page 330 has associated therewith information such as the transaction identifier and the IP address of bill payment server 120, rather than the IP address of merchant server 110. In step 8, bill payment server 120 transmits the Charges Web Page to mobile IP terminal 100. Transmission is via the IP network using the mobile terminal's IP address.

As shown in step 9, mobile IP terminal 100 approves the charges received from bill payment server 120. In steps, 10-13, bill payment server 120 validates the user's credit card and transmits confirmations to mobile IP terminal 100 and merchant server 110. Finally, in step 14, merchant server 110 acknowledges receipt of the confirmation. Steps 9-14 of FIG. 4B are essentially the same as steps 5-10 of FIG. 2, and thus, will not be described further here.

It should be understood that in the embodiment of FIG. 4, mobile IP terminal 100, rather than bill payment server 120, may store the merchant database (or a truncated version thereof downloaded from bill payment server 120 and specific to the region or area where mobile IP terminal 100 is located). Mobile IP terminal 100, rather than bill payment server 110, would then be the one comparing its geographic location information with the geographic location information of merchants stored in the database to determine the identity of the merchant where the user is located, and, in particular, to identify the IP address of the merchant. Alternatively, bill payment server 120 could simply provide mobile IP terminal 100 with the IP address of merchant server 110 or, conversely, provide merchant server 110 with the IP address of mobile IP terminal 100. In any event, mobile IP terminal 100, in steps 1-8 of FIG. 4A, would then communicate directly with merchant server 110 over the long range wireless network and IP network 140, rather than indirectly via bill payment server 120.

The many features and advantages of the present invention are apparent from the detailed specification, and thus, it is intended by the appended claims to cover all such features and advantages of the invention which fall within the true spirit and scope of the invention.

Furthermore, since numerous modifications and variations will readily occur to those skilled in the art, it is not desired that the present invention be limited to the exact construction and operation illustrated and described herein, and accordingly, all suitable modifications and equivalents which may be resorted to are intended to fall within the scope of the claims. For example, the functionality described above as being provided by bill payment server 120 alternatively could be incorporated into the functionality provided by the credit card agency server 130.

In addition, it will be readily appreciated that the present invention has applicability to any type of service that may be provided to a user of a mobile IP terminal, and, in no way, is intended to be limited to restaurant services. Such services include those provided by doctor offices, dentist offices; barber shops, nail salons, repair shops, etc. For example, in an automobile repair shop context, an attendant at a repair shop would enter a user identifier, such as the user's license plate number (rather than a table number) into the merchant database at the time the user drops off his automobile for repairs. When picking up his automobile, the user would then use mobile IP terminal 100 to enter the license plate number into the ID web page to permit the repair shop to associate him with the charges incurred for the repairs. Otherwise, the message flows of FIGS. 2 and 4 in the automobile repair shop context would be the same as in the restaurant context.

## Claims

1. An efficient and secure method for using a mobile wireless terminal to pay for charges associated with services rendered by a merchant, comprising:
receiving a service;
requesting charges associated with said service;
receiving and displaying said charges; and
transmitting, using said mobile wireless terminal, payment information.

2. The method of claim 1, wherein said steps of requesting and receiving are performed using short range wireless technology.

3. The method of claim 1, wherein said steps of requesting, receiving and transmitting are performed using TCP/IP.

4. The method of claim 1, wherein said payment information is not disclosed to said merchant.

5. The method of claim 1 wherein said payment information comprises a credit card number.

6. The method of claim 1 wherein requesting said charges includes providing a user identifier.

7. The method of claim 6 wherein said user identifier is a table number.

8. The method of claim 1, further comprising:
transmitting geographic information concerning the location of said mobile wireless terminal.

9. The method of claim 1, further comprising:
receiving confirmation of payment.

10. An efficient and secure method to permit a merchant to receive payment for charges associated with services provided to a user of a mobile wireless terminal, comprising:
receiving a request for charges from said user;
providing charges for display to the user; and
receiving confirmation of payment,
wherein said merchant does not receive payment information of said user.

11. The method of claim 10 wherein said steps of receiving and providing are performed using short range wireless technology.

12. The method of claim 10 wherein said payment information includes a credit card number.

13. The method of claim 10, further comprising:
receiving a user identifier.

14. The method of claim 13 wherein said user identifier is a license plate number.

15. An efficient and secure method to permit a user of a mobile wireless terminal to pay for charges associated with services rendered by a merchant, comprising:
receiving an approval of said charges from said user, said approval including payment information; and
providing confirmation of payment,
wherein said payment information is not disclosed to said merchant.

16. The method of claim 15, wherein said confirmation is provided to both said user of said mobile wireless terminal and said merchant.

17. The method of claim 15, further comprising:
receiving geographic location information for said mobile wireless terminal.

18. The method of claim 17, further comprising:
storing geographic location information of merchant locations; and
comparing said received geographic location information with said stored geographic location information to determine an identity of a merchant at whose establishment said user is currently located.

19. The method of claim 18 wherein said identity of said merchant includes an IP address of said merchant.

20. A mobile wireless terminal comprising:
a memory device storing a program; and
a processor in communication with said memory device, said processor operative with said program to: request charges associated with a service received by a user of said mobile wireless terminal; receive and display said charges; and transmit payment information.

21. A system to permit a merchant to receive payment for charges associated with services provided to a user of a mobile wireless terminal, comprising:
a memory device storing a program; and
a processor in communication with said memory device, said processor operative with said program to: receive a request for charges from said user; provide charges for display to the user, and receive confirmation of payment, wherein said merchant does not receive payment information of said user.

22. A system to permit a user of a mobile wireless terminal to pay for charges associated with services rendered by a merchant, comprising:
a memory device storing a program; and
a processor in communication with said memory device, said processor operative with said program to: receive an approval of said charges from said user, said approval including payment information; and provide confirmation of payment,
wherein said payment information is not disclosed to said merchant.
